# EUROPÄISCHE PATENTSCHRIFT

(11) **EP 1 002 504 B1**
(45) Veröffentlichungstag und Bekanntmachung des Hinweises auf die Patenterteilung: **14.04.2010**
(21) Anmeldenummer: 99120897.6
(22) Anmeldetag: 28.10.1999
(51) Int. Cl.: A61C 19/10

(54) **Farbschlüssel**
Color key
Dispositif d'identification de couleur

(30) Priorität: 05.11.1998 DE 19851134
(43) Veröffentlichungstag der Anmeldung: 24.05.2000
(73) Patentinhaber: Ivoclar Vivadent AG, 9494 Schaan (LI)
(72) Erfinder: Foser, Hans-Peter, FL 9496 Balzers (LI)
(74) Vertreter: Baronetzky, Klaus

(56) Entgegenhaltungen:
- WO-A-98/24384
- US-A- 5 078 598
- US-A- 5 149 267
- US-A- 5 588 834

## Beschreibung

Die Erfindung betrifft einen Farbschlüssel, insbesondere als Hilfsmittel für die Auswahl künstlicher Zähne, und als Kommunikationsmittel für die restaurative Zahnheilkunde gemäß dem Oberbegriff vom Anspruch 1.

Ein derartiger Farbschlüssel ist aus der DE-PS 195 09 830 oder der US 5 149 267 bekannt geworden. Dieser Farbschlüssel hat sich im Grunde bewährt, wenn es gilt, hinsichtlich der Farbwahl und der patientenspezifischen Individualisierung, aber auch der unterschiedlichen Schwerpunkte verschiedener Zahnarztpraxen und Zahntechniklabors, flexibel zu sein.

Im Rahmen zunehmender Ansprüche an die Naturtreue künstlicher Zähne besteht der Wunsch, Farbschlüssel mit einer erhöhten Reproduktionssicherheit bereitzustellen, die durch unmittelbarem Vergleich mit den vorhandenen natürlichen Zähnen ein ästhetisch verbessertes Restaurationsergebnis ermöglichen.

In diesem Zusammenhang sind mehreren Farbschlüssel bekannt geworden. Ein Beispiel für einen derartigen Farbschlüssel ist aus der DE-OS 34 29 927 ersichtlich. Bei diesem Farbschlüssel sind die Trägerelemente abnehmbar befestigt, und zwischen dem Trägerelement und der Dentalmasse ist eine Opaker-Schicht angeordnet, so daß die Farbe und Struktur des Trägerelements nicht durchscheinen soll.

Ferner ist es bereits vorgeschlagen worden, die Steckbasis für die Trägerelemente mehrfach vorzusehen und die Steckbasen lösbar miteinander zu verbinden. Bei dieser Lösung können die beiden Steckbasen in unterschiedlichen Ausrichtungen zueinander gelagert werden.

Jedes Steckelement läßt sich bei den bekannten Farbschlüsseln der Steckbasis entnehmen, so daß im Grunde ein Vergleich zwischen natürlichen und künstlichen Zähnen dadurch möglich ist, daß das Steckelement mit dem Musterelement neben dem natürlichen Zahn gehalten wird. Meist muß das Steckelement aus räumlichen Gründen im Lippenbereich des Patienten etwas schräg neben dem natürlichen Zahn gehalten werden, so daß sich bereits aufgrund des unterschiedlichen Lichteinfallswinkels ein optisch etwas anderer Eindruck ergibt, den nur wenige Patienten gedanklich kompensieren können, so daß die Wunschfarbe, wie sie mit Hilfe des Farbschlüssels ermittelt wurde, von dem tatsächlichen Ergebnis häufig abweicht.

Auch wenn es bekannt ist, daß für die Ermittlung der optischen Übereinstimmung der Einfall von Nordlicht optimal ist, läßt sich die optimale Beleuchtungssituation in vielen Zahnarztpraxen oder Dentallabors nicht oder nur unter Schwierigkeiten realisieren - zumal regelmäßig auch Kunstlichtquellen vorhanden sind, die die für andere Arbeiten erforderliche Ausleuchtung ermöglichen.

Auch bei gleichen spektrophotometrischen Kurven wirken gleiche Musterelemente unterschiedlich, wenn einmal ein texturiertes und strukturiertes Musterelement und andererseits eine glatte und ebene Oberfläche verglichen werden.

Für die in weiten Bereichen der Restauration verwendete Maltechnik werden regelmäßig Farbtöne verwandt, die sich deutlich von der Hauptmasse unterscheiden. Auch derartige Farbtöne sollten beurteilt werden können, was jedoch mit den bekannten Farbschlüsseln nicht oder nur unzureichend möglich ist. Dies gilt in gleicher Weise für die Farbnuancen, die für Hals- und Transparenzmassen verwendet werden.

Daher liegt der Erfindung die Aufgabe zugrunde, einen Farbschlüssel gemäß dem Oberbegriff vom Anspruch 1 zu schaffen, der eine verbesserte Beurteilung bei der Auswahl eines künstlichen Zahns einschließlich dessen Nuancen erlaubt und unempfindlicher gegenüber unterschiedlichen Beleuchtungssituationen ist.

Diese Aufgabe wird erfindungsgemäß durch Anspruch 1 gelöst. Vorteilhafte Weiterbildungen ergeben sich aus den Unteransprüchen.

Erfindungsgemäß ist es besonders günstig, daß für die Herstellung der Musterelemente genau die gleichen Materialien wie für das Original des Zahnersatzes verwendet werden. Es werden identische Farbzusätze mit identischen spektrometrischen Kurven in beiden Fällen verwendet, und auch der Herstellvorgang hinsichtlich der Pulveraufbereitung, des Brennens, aber auch beispielsweise der verwendeten Chargen des Keramikpulvers, werden in beiden Fällen verwendet. Damit ergibt sich zunächst die Voraussetzung, daß die Musterelemente eine optische Identität mit den künstlichen Zähnen bieten, so daß sich keine Farbabweichungen einstellen können.

Erfindungsgemäß ganz besonders vorteilhaft ist es, daß eine Oberfläche der Musterelemente naturzahnartig texturiert, die andere aber eben und glatt ist. Die texturierte und gewölbte Oberfläche bietet damit die Möglichkeit, den Eindruck, den der - identisch hergestellte - künstliche Zahn später ergeben wird, an Ort und Stelle zu überprüfen. Demgegenüber erlaubt die auf der Rückseite vorgesehene glatte Oberfläche die verbesserte reine Farbbeurteilung, nachdem sie leichter so gehalten werden kann, daß Reflexionen ausgeschlossen sind. Die plane oder nicht texturierte Fläche ist zur Farbdefinierung des präparierten Zahnstumpfes besonders wichtig und stellt eine erfindungsgemäße Besonderheit im Unterschied zu bestehenden Farbmustern dar.

Bei dem bekannten Farbschlüssel wurde bislang ein zusätzliches Zweitmuster für den zu präparierenden Farbstumpf verwendet, was vom Aufwand her erheblich ungünstiger ist.

Erfindungsgemäß ist es vorgesehen, daß für die Auswahl der Farbgebung des künstlichen Zahns beide Gesichtspunkte herangezogen werden, also zum einen die eigentliche Farbauswahl bzw. die Farbauswahl des präparierten Zahnstumpfes über die plane und glatte Oberfläche, während dann das Erscheinungsbild des Zahnes durch einfaches Umdrehen des Elements beurteilt werden kann.

In diesem Zusammenhang ist es besonders günstig, daß das Musterelement oder das Musterplättchen aus ein und derselben Dentalmasse besteht, wobei Vorder- und Rückseite trotz unterschiedlicher Wirkungen gerade bei hellem Auflicht unterschiedlich wirken, so daß dem Patienten der Unterschied zwischen dem Farbton an sich und dem optischen Eindruck genau dieses Farbtons bei Realisierung einer entsprechenden Zahnrestauration deutlich gemacht werden kann.

Erfindungsgemäß ist es vorgesehen, das Musterplättchen gelenkig auf dem Steckelement zu lagern. Hierzu ist der oberer Teil des Steckelements bevorzugt als Musterhalter ausgebildet, auf dem das Musterelement oder das Musterplättchen gelagert ist, während der untere Teil als Schaft ausgebildet ist. Beide Teile sind über ein Gelenk miteinander verbunden, das ein Abknicken um etwa 90° erlaubt.

Mit dieser Ausgestaltung ist es möglich, daß die Musterfläche oder das Musterelement winkeltreu zu dem natürlichen Zahn, an den angeglichen werden soll, in den Mund des Patienten (Oberkiefer und Unterkiefer) gehalten wird, wobei das Gelenk sich zwischen Frontzähnen und Lippe erstrecken kann. Dies eröffnet eine verbesserte Beurteilungsmöglichkeit und jedenfalls eine noch weiter verminderte Empfindlichkeit gegenüber Unterschie-Beleuchtungssituationen.

Gemäß einer weiteren bevorzugten Ausgestaltung ist eine Steckbasis für die Musterzähne mit einer weiteren Steckbasis für Schneidemassenmuster lösbar verbunden. Dies ermöglicht es, zusätzlich zu den Musterzähnen für Schmelz- und Effektmassen besondere Musterelemente bereitzustellen, die dann bevorzugt keine Zahnform haben, sondern keilförmig hergestellt sind. Auch hier ist es günstig, mit identischen Farbzusätzen für Muster und Original zu arbeiten und auch den gleichen Herstellvorgang einzuhalten.

Die Lösbarkeit der Steckbasis für Effekt- oder Schmelzmassen von der für Musterzähne erlaubt die getrennte Handhabung, so daß bei Bedarf der Zahnarzt die weitere Steckbasis anstecken kann, um den anspruchsvolleren und zu stärkeren Differenzierungen neigenden Patienten eine zusätzliche Nuanzierungsmöglichkeit an die Hand zu geben, während weniger entscheidungsfreudige Patienten mit der Musterzahn-Steckbasis und den dort verfügbaren Mustern von beispielsweise 6 oder 12 Farbmuster-Zähnen, die auf der Oberseite und der Unterseite der Steckbasis eingesteckt sind, bedient werden können.

Dennoch kann auch die Lagerhaltung vereinfacht sein. Für die Aufbewahrung werden kurzerhand beide Steckbasen aneinander gesteckt, wobei es bevorzugt ist, die Steckelemente so auszugestalten, daß jede Steckbasis auch ohne scharfkantige Vorsprünge selbstständig handhabbar ist.

Eine besonders griffgünstige Form der Doppelanordnung der Steckbasen ergibt sich bei einer Verjüngung der Steckbasen an der Buchsenseite, also der Seite, an welcher die Steckbasen aneinander gesteckt werden. Die Handhabbarkeit, die für das sichere Einstecken der Steckelemente in deren Aufnahmen erwünscht ist, läßt sich weiter durch endseitig angebrachte Griffmulden an jeder Steckbasis verbessern, wobei die Griffmulden zudem das Zusammenstecken und Auseinandernehmen der beiden Steckbasen erlauben. Darüberhinaus läßt die Doppelanordnung auch eine individuelle Anpassung an anwenderspezifische Wünsche zu. Beispielsweise lassen sich auf diese Weise auch Farben unterschiedlicher Hersteller als Farbmuster miteinander kombinieren, so daß die Auswahlbasis insgesamt verbessert wird.

Die bevorzugte leichte Wölbung der Oberseite und der Unterseite der Steckbase bietet eine verbesserte Handhabung, nachdem sie der Rundung der Handflächen angepaßt ist.

Bevorzugt sind auch die Steckelemente für die Schneidemassen oder Schmelzmassen abwinkelbar und hierzu mit einem entsprechenden Gelenk versehen, so daß auch sie besonders nah an die natürlichen Zähne angelegt werden können, um die Beurteilung insofern zu erleichtern.

Überraschend ermöglicht die erfindungsgemäße Farbschlüssel durch Abgleich von texturierter und ebener Oberflächen aus der gleichen Massensubstanz zumindest teilweise metamerische Effekte, also die Eigenschaft spektral unterschiedlicher Farbreize, die gleiche Farbempfindung auszulösen, zu kompensieren.

Weitere Einzelheiten, Vorteile und Merkmale ergeben sich aus der nachfolgenden Beschreibung eines Ausführungsbeispiels anhand der Zeichnungen.

Es zeigen:
- Fig. 1: eine schematische perspektivische Ansicht eines erfindungsgemäßen Farbschlüssels;
- Fig. 2: eine teilweise aufgebrochene Seitenansicht und eine Vorderansicht eines ersten erfindungsgemäßen Steckelements für den Farbschlüssel gemäß Fig. 1; und
- Fig. 3: eine teilweise aufgebrochene Seitenansicht und eine Vorderansicht eines ersten erfindungsgemäßen Steckelements für den Farbschlüssel gemäß Fig. 1.

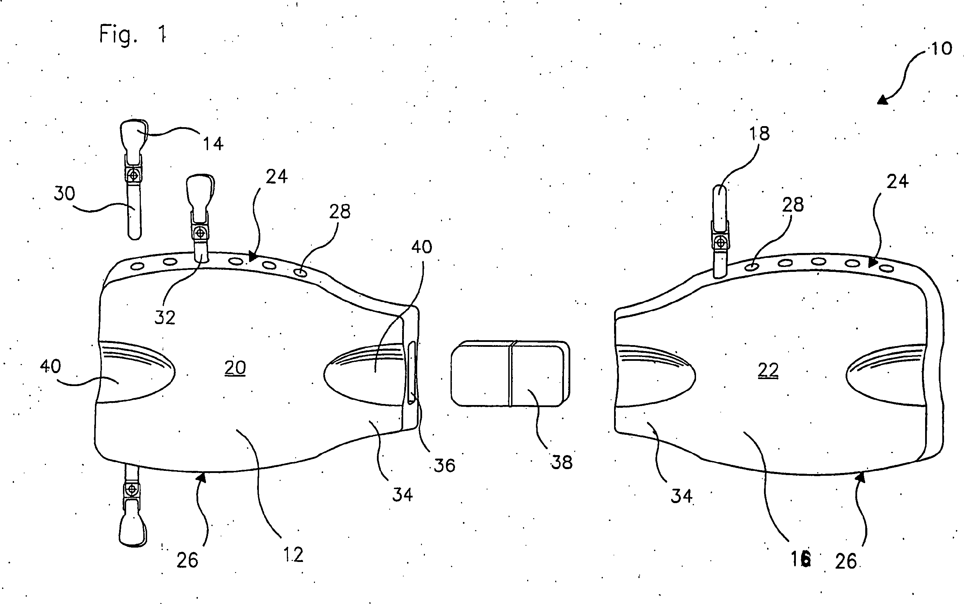

Der in Fig. 1 dargestellte Farbschlüssel 10 weist eine Steckbasis 12 für Farb-Musterzähne 14 und eine Steckbasis 16 für Schneidemassenmuster 18 auf. Beide Steckbasen 12 und 16 sind zueinander im wesentlichen spiegelsymmetrisch ausgebildet und haben einander entsprechende Vorder- und Rückseiten, wobei aus Fig. 1 lediglich die Vorderseiten 20 und 22 ersichtlich sind.

Jede Steckbasis 12 und 16 weist eine Oberseite 24 und eine Unterseite 26 auf. Die Seiten 24 und 26 sind mit Steckelement-Buchsen 28 ausgestattet, die als Sacklöcher ausgebildet sind. In dem dargestellten Ausführungsbeispiel sind je 6 Aufnahmen oder Buchsen 28 für die Steckelemente nebeneinander vorgesehen.

Die Oberseiten 24 und 26 sind im Bereich der Steckelement-Buchsen 28 leicht ballig gekrümmt ausgebildet. Nachdem die Buchsen sich bevorzugt senkrecht zur Oberfläche erstrecken, divergieren dementsprechend Steckelemente 30, 32 voneinander, so daß sie leichter greifbar sind.

Gemäß einer modifizierten Ausgestaltung ist es vorgesehen, daß die Steckelemente 30, 32 zueinander parallel ausgerichtet sind, wobei es sich versteht, daß der Abstand der Buchsen 28 in weiten Bereichen an die Erfordernisse anpaßbar ist.

Die Steckbasen 12 und 16 weisen anschließend an den Bereich der Buchsen 28 je einen Anschlußbereich 34 auf, der sich verjüngend ausgbildet ist. Der Anschlußbereich 34 weist eine recht große Buchse 36 an seiner Stirnseite aus, die einen wesentlichen Teil der Stirnseite einnimmt. Eine entsprechende Buchse ist an der hierzu spiegelsymmetrischen Stirnseite der Steckbasis 16 vorgesehen. Damit ergibt sich für den aus beiden Basen zusammengefügten erfindungsgemäßen Farbschlüsel 10 eine hantelartige und ermüdungsfrei greifbare, also besonders ergonomische Form.

Die Buchsen 36 sind an die Form eines Steckverbindungsglieds 38 angepaßt, das je zur Hälfte vollständig in der Buchse 36 der Steckbasis 12 und in derjenigen der Steckbasis 16 aufgenommen werden kann. Die Aufnahme erfolgt in spielfreier Passung, so daß eine gewisse Auszugskraft überwunden werden muß, um die über das Steckverbindungsglied 38 verbundenen Steckbasen 12 und 16 voneinander zu trennen.

Die Steckbasen 12 und 16 weisen ferner auf ihrer Vorderseite 20 und 22, aber auch hierzu symmetrisch auf ihrer nicht dargestellten Rückseite den Stirnseiten benachbart Griffmulden 40 auf, die das Lösen der Verbindung zwischen ihnen, aber auch die Gesamthandhabung erleichtern. Alle Kanten und Ecken der Steckbasen 12 und 16 sind abgerundet, um eine unkritische Handhabung zu ermöglichen, wobei ferner glatte Oberflächen bevorzugt sind, so daß die Verschmutzungstendenz gering ist. Aufgrund der abgerundeten und gefälligen Ausgestaltung ist trotz der glatten Oberflächen eine sichere Handhabung gewährleistet.

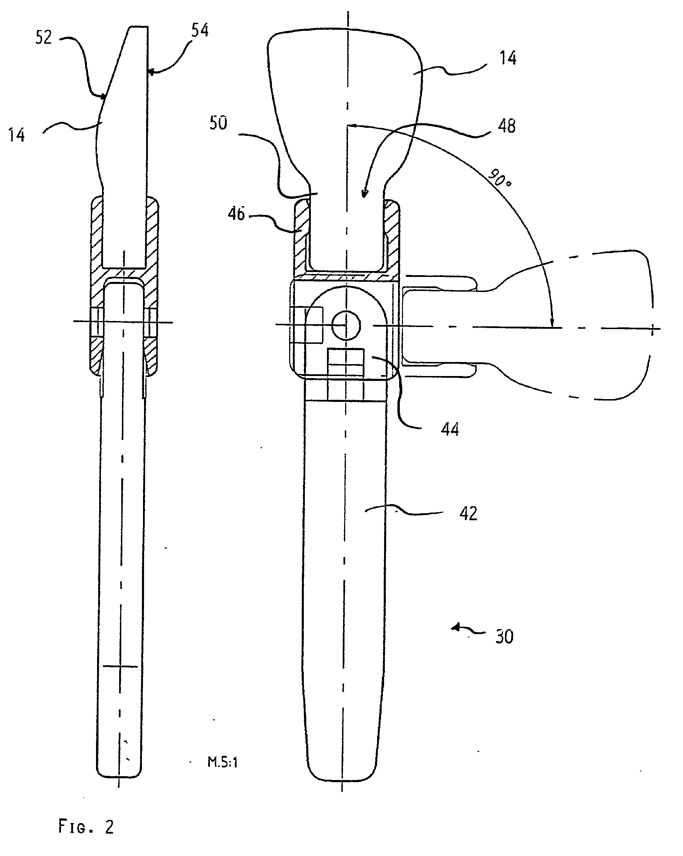

Die Steckelement-Buchsen 28 sind in Fig. 1 der Einfachheit halber rund dargestellt. Bevorzugt ist jedoch eine von der Kreisform abweichende Form, beispielsweise entsprechend der Form des Schachtes gemäß Fig. 2, also im wesentlichen rechteckig.

In Fig. 2 ist ein Steckelement 30 in zwei Ansichten, nämlich einer Vorderansicht und einer Seitenansicht dargestellt. Jedes Steckelement weist einen Schaft 42 auf, der in die Buchsen 28 einsteckbar ist und dort auch dann sicher hält, wenn die Steckbasis 12 in eine beliebige Stellung gebracht wird.

Jedes Steckelement 30 weist bevorzugt ein Gelenk 44 auf, das den Schaft 42 mit einem Musterhalter 46 verbindet. Der Musterhalter 46 nimmt seinerseits der Musterzahn 14 auf, wobei in dem dargestellten Ausführungsbeispiel der Musterzahn 14 mit seinem Zahnhals in spielfreie Passung in einer entsprechenden Aufnahme 48 des Musterhalters 46 gehalten ist.

Das Gelenk 44 ist so ausgebildet, daß der Musterhalter 46 mit dem Musterzahn 14 in beide Richtungen um 90° schwenkbar ist. Für die Anwendung des Musterzahn-Steckelements 30 kann dementsprechend das Gelenk 44 in eine der seitlichen abgeknickten Stellungen verschwenkt werden, so daß der Schaft 44 sich als seitliche Greifhandhabe für den Musterzahn 14 darstellt, die wirksame Höhe unterhalb der Musterzahns 14 jedoch deutlich, beispielsweise auf ein Drittel, reduziert ist.

Erfindungsgemäß ist es, daß in der geraden Stellung der Gelenks 44 der Musterhalter 46 an dem Schaft 42 leicht einrastet, um zu verhindern, daß in dem in die Steckbasis 12 eingesteckten Zustand die Musterzähne 14 sich seitlich versehentlich bewegen.

Aus der Seitendarstellung gemäß Fig. 2 ist ersichtlich, daß die Vorderseite 52 des Musterzahns 14 texturiert und insbesondere konturiert ist, um insofern dem natürlichen Zahn möglichst ähnlich zu sein, während die Rückseite 54 plan und mit einer glatten Oberfläche ausgerüstet ist. Durch wahlweises Verdrehen des Steckelements 10 läßt sich damit trotz der Verwendung ein und derselben Dentalmasse für den Musterzahn 14 eine Beurteilung der verschiedenen Aspekte der Farbgebung vornehmen.

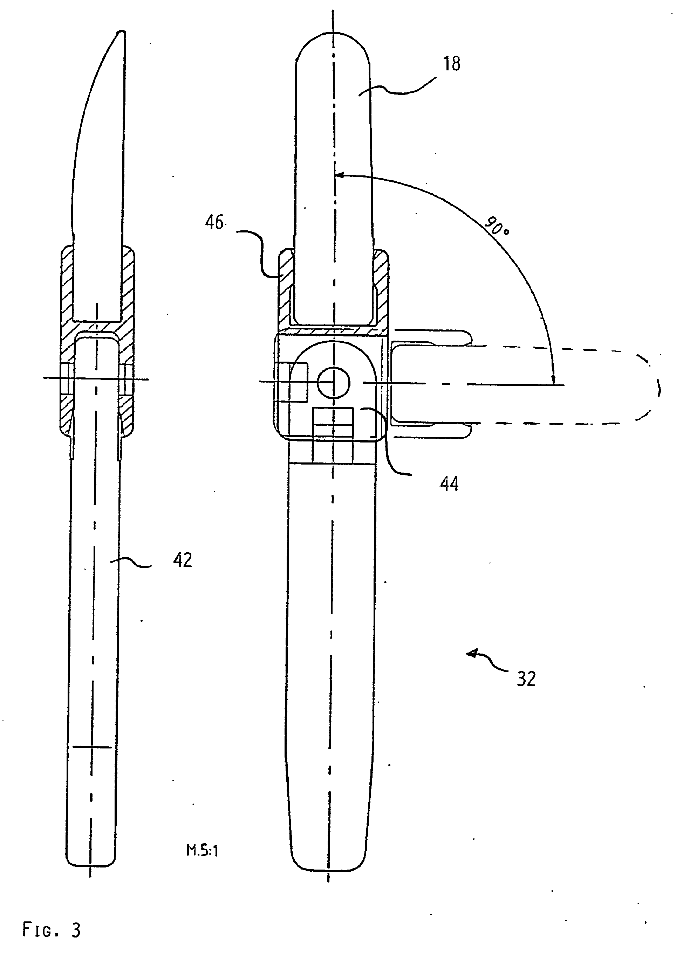

Aus Fig. 3 ist ein entsprechendes Steckelement 32, jedoch für Schneidemassen ersichtlich, und auch dieses Steckelement ist mit einem Gelenk 44 ausgerüstet, das ein seitliches verschwenken erlaubt.

Anstelle des Musterzahns 14 ist das Steckelement 32 mit einem Schneidemassenmuster 18 versehen, wobei der Musterhalter 46 der Ausgestaltung gemäß Fig. 2, also für den Musterzahn, entspricht. Das Schneidemassenmuster 18 ist im wesentlichen stäbchenförmig und sich zur Spitze hin verjüngend ausgebildet. Es dient der Wiedergabe von Schmelz-, Effekt- und Spezialmassen, aber auch zur Wiedergabe von Zahnhals-Farbtönen. Hier ist bewußt keine Zahnform gewählt, nachdem derartige Farbtöne für Sonderzwecke eingesetzt werden sollen und können - eine eindeutige Unterscheidbarkeit von den Musterzähnen ist insofern gegeben.

## Patentansprüche

1. Farbschlüssel, insbesondere als Hilfsmittel für die Auswahl künstlicher Zähne und als Kommunikationsmittel für die restaurative Zahnheilkunde, mit einer Mehrzahl von Steckelementen (30, 32), die in eine Steckbasis einsteckbar sind und an deren Ende je ein Musterelement angebracht ist, wobei die Steckelemente (30, 32) in Musterelemente (14) auslaufen, und wobei jedes Musterelement (14) einen oberen, aus dem jeweiligen Steckelement herausragenden Teil aufweist, dessen eine Oberfläche (52) naturzahnartig texturiert und insbesondere gewölbt ist, und dessen die andere, insbesondere rückseitige Oberfläche (54) der Musterelemente (14) plan und glatt ist **dadurch gekennzeichnet, dass** die Musterelemente (14) aus dem gleichen Material und in der gleichen Weise wie die künstlichen Zähne und/oder das Restaurationsmaterial oder -medium hergestellt sind, und wobei jedes Steckelement (30, 32) einen Schaft (42) und einen über ein Gelenk (44) mit dem Schaft verbundenen und schwenkbeweglich gelagerten Musterhalter (46), zur Aufnahme des Musterelements (14), aufweist, wobei in einer geraden Stellung des Gelenks (44) der Musterhalter (46) an dem Schaft (42) einrastet.

2. Farbschlüssel nach Anspruch 1,
**dadurch gekennzeichnet, dass** die geraden Stellung des Gelenks (44) die gestreckte Position des Steckelements (30, 32) in der Steckbasis entspricht.

3. Farbschlüssel nach einem der Ansprüche 1 oder 2,
**dadurch gekennzeichnet, dass** eine Musterzahn-Steckbasis (16) lösbar mit einer Schneidemassenmuster-Steckbasis (18) verbunden ist.

4. Farbschlüssel nach einem der vorhergehenden Ansprüche,
**dadurch gekennzeichnet, dass** das Musterelement in spielfreie Passung in einer Aufnahme (48) des Musterhalters (46) gehalten ist.

5. Farbschlüssel nach einem der vorhergehenden Ansprüche,
**dadurch gekennzeichnet, dass** das Gelenk (44) zwischen dem Musterhalter (46) und dem Schaft (42) eines Steckelements (30, 32) eine Abwinklung um je etwa 90° beidseitig einer gestreckten Position zulässt.

6. Farbschlüssel nach einem der vorhergehenden Ansprüche,
**dadurch gekennzeichnet, dass** jede Steckbasis (12, 16) eine Ausnehmung oder Buchse (36) für die Aufnahme eines Steckverbindungsglieds (38) aufweist, mit welchem die Steckbasen (12, 16) miteinander verbindbar sind.

7. Farbschlüssel nach einem der vorhergehenden Ansprüche,
**dadurch gekennzeichnet, dass** die Steckbasen (12, 16) jeweils einen verjüngt ausgebildeten Anschlussbereich (34) aufweisen.

8. Farbschlüssel nach einem der vorhergehenden Ansprüche,
**dadurch gekennzeichnet, dass** eine Mehrzahl von Steckelementbuchsen (28) an einer Oberseite (24) und an einer Unterseite (26) jeder Steckbasis (12, 16) ausgebildet sind.

9. Farbschlüssel nach einem der vorhergehenden Ansprüche,
**dadurch gekennzeichnet, dass** die Oberseite (24) und die Unterseite (26) jeder Steckbasis (12, 16) lang gestreckt und insbesondere leicht gewölbt ausgebildet ist.

10. Farbschlüssel nach einem der vorhergehenden Ansprüche,
**dadurch gekennzeichnet, dass** die den Stirnseiten benachbarten Enden jeder Steckbasis (12, 16) mit flachen Griffmulden (40) ausgestattet sind.

11. Farbschlüssel nach einem der vorhergehenden Ansprüche,
**dadurch gekennzeichnet, dass** die Schneidemassenmuster (18) im wesentlichen stabförmig und insbesondere leicht verjüngt ausgebildet sind.

12. Farbschlüssel nach einem der vorhergehenden Ansprüche,
**dadurch gekennzeichnet, dass** die Musterelemente (14) aus keramischer Dentalmasse bestehen und an den insbesondere aus Kunststoff bestehenden Musterhaltern (46) kraftschlüssig und formschlüssig gehalten sind.

## Claims

1. Color key, in particular as a tool or means for selecting artificial teeth and as a communication means for the restorative dentistry, said color key comprising a plurality of insert members (30, 32) that may be inserted or plugged into an insert base and each of which has a sample element at the end thereof, said insert elements (30, 32) leading into sample elements (14) and each sample element (14) having an upper part projecting from the respective insert element, one surface (52) of which is textured and especially curved to match the natural tooth, and the other, in particular the reverse-sided said part having a texture of the surface (52) matching the texture of a natural tooth and a curvature matching the curvature of a natural tooth, and the other surface of which, in particular the rear-sided surface (54) of the sample elements (14) is flat and glossy;
**characterized in that** the sample elements (14) consist of and are produced in the same manner as artificial teeth and/or the restorative material or restorative medium, and wherein each insert member (30, 32) comprises a shaft (42) and a sample holder (46) that is connected to the shaft by means of a joint (44) and that is pivotally mounted, for receiving the sample element (14), wherein in an aligned or straight position of the joint (44), said sample holder (46) snaps into the shaft (42).

2. Color key as claimed in claim 1,
**characterized in that** the aligned or straight position of the joint (44) corresponds to the stretched position of the insert member (30, 32) in the insert base.

3. Color key as claimed in one of the claims 1 or 2,
**characterized in that** an insert base (16) for sample teeth is releasably connected to an insert base (18) for enamel samples.

4. Color key as claimed in one of the preceding claims,
**characterized in that** the sample element is accurately fit in a receiving section (48) of the sample holder (46) with zero clearance.

5. Color key as claimed in one of the preceding claims,
**characterized in that** the joint (44) between the sample holder (46) and the shaft (42) of an insert element (30, 32) permits an angular offset or bending of approximately 90° on both sides of an stretched position, respectively.

6. Color key as claimed in one of the preceding claims,
**characterized in that** each insert base (12, 16) comprises a receiving section or socket (36) for receiving or accommodating an insert connecting member (38), with the aid of which the insert bases (12, 16) may be connected to one another.

7. Color key as claimed in one of the preceding claims,
**characterized in that** the insert bases (12, 16) each comprise a connecting area (34) that is formed in a tapered manner.

8. Color key as claimed in one of the preceding claims,
**characterized in that** a plurality of insert element sockets (28) is formed on a top side (24) and a bottom side (26) of each insert base (12, 16).

9. Color key as claimed in one of the preceding claims,
**characterized in that** the top side (24) and the bottom side (26) of each insert base (12, 16) are formed in an elongate and in particular in a slightly curved manner.

10. Color key as claimed on one of the preceding claims,
**characterized in that** the ends of each insert base (12, 16) adjacent to the face sides thereof are provided with flat grip depressions (40).

11. Color key as claimed in one of the preceding claims,
**characterized in that** the enamel samples (18) are substantially formed in a rod-shaped and in particular in a slightly tapered manner.

12. Color key as claimed in one of the preceding claims,
**characterized in that** the sample elements (14) consist of ceramic dental material and are attached to the sample holders (46) that in particular consist of plastic material, in a force-fit and form-fit manner.

## Revendications

1. Teintier, utilisable de préférence comme aide à la sélection de dents artificielles et comme moyen de communication pour la dentisterie de restauration, ayant une pluralité d'éléments enfichables (30, 32) qui sont insérables dans une base d'insertion et ayant chacun un élément d'échantillon fixé à l'extrémité, où les éléments enfichables (30, 32) se terminent dans les éléments d'échantillon (14), et où chaque élément d'échantillon (14) présente une partie supérieure dépassant de l'élément enfichable, dont une surface (52) est texturée et de préférence voûtée comme une dent naturelle et dont l'autre surface (54), celle de préférence à larrière des éléments d'échantillon (14) est plate et lisse, **caractérisé en ce que** les éléments d'échantillon (14) sont fabriqués en le même matériau et de la même manière que les dents artificielles et/ou le matériau ou la substance de restauration, et où chaque élément enfichable (30, 32) présente une tige (42), et un porte-échantillons (46) logé pivotablement et relié à la tige par une articulation (44) pour l'admission des éléments d'échantillon (14), où quand l'articulation (44) est en position droite, le porte-échantillons (46) s'encliquette sur la tige (42).

2. Teintier selon la revendication 1, **caractérisé en ce que** la position droite de l'articulation (44) correspond à la position étirée de l'élément enfichable (30, 32) dans la base d'insertion.

3. Teintier selon l'une des revendications 1 ou 2, **caractérisé en ce qu'**une base d'insertion (16) de dents-échantillon est reliée détachable à une base dinsertion d'échantillons de masse incisale (18).

4. Teintier selon l'une des revendications précédentes, **caractérisé en ce que** l'élément d'échantillon est maintenu ajusté sans jeu dans un logement (48) du porte-échantillon (46).

5. Teintier selon l'une des revendications précédentes **caractérisé en ce que** l'articulation (44) entre le porte-échantillon (46) et la tige (42) d'un élément enfichable (30, 32) permet un pliage d'environ 90° respectivement des deux côtés dune position étirée.

6. Teintier selon l'une des revendications précédentes **caractérisé en ce que** chaque base d'insertion (12, 16) présente une exclusion ou une douille (36) pour loger un élément de connexion (38), avec lequel les bases d'insertion (12, 16) sont reliables ensemble.

7. Teintier selon l'une des revendications précédentes **caractérisé en ce que** les bases d'insertion (12, 16) présentent chacune une zone de raccordement (34) configuré effilé.

8. Teintier selon l'une des revendications précédentes **caractérisé en ce qu'**une pluralité de douilles d'éléments enfichables (28) est formée sur une face supérieure (24) et une face inférieure (26) de chaque base d'insertion (12, 16).

9. Teintier selon l'une des revendications précédentes **caractérisé en ce que** la face supérieure (24) et la face inférieure (26) de chaque base dinsertion (12, 16) est formée étiré en longueur et de préférence légèrement voûtée.

10. Teintier selon l'une des revendications précédentes **caractérisé en ce que** les extrémités de chaque base d'insertion (12, 16) avoisinant les faces de devant sont équipées de poignées concaves plates (40).

11. Teintier selon l'une des revendications précédentes, **caractérisé en ce que** les échantillons de masse incivale (18) sont essentiellement configurés en forme de barre et de préférence légèrement effilé.

12. Teintier selon l'une des revendications précédentes, **caractérisé en ce que** les éléments d'échantillon (14) sont composés de masse dentaire céramique et sont maintenus emboîtables par encliquetage à engagement positif et/ou par adhérence sur les porte-échantillons (46) composés de préférence de matière plastique.
